(19) **Europäisches Patentamt European Patent Office Office européen des brevets**

(11) **EP 3 710 817 B1**

(12) **EUROPEAN PATENT SPECIFICATION**

(45) Date of publication and mention of the grant of the patent:
**15.12.2021 Bulletin 2021/50**

(21) Application number: **18807408.2**

(22) Date of filing: **26.10.2018**

(51) Int Cl.:
*G01N 27/02* *(2006.01)*    *G01N 27/06* *(2006.01)*

(86) International application number:
**PCT/IB2018/058373**

(87) International publication number:
**WO 2019/097333 (23.05.2019 Gazette 2019/21)**

(54) **METHOD FOR DETECTING AND MEASURING A LAYER DEPOSITED ON A SURFACE IN CONTACT WITH A LIQUID MEDIUM AND DETECTION AND MEASURING SENSOR IMPLEMENTING THE SAME**

VERFAHREN ZUR DETEKTION UND MESSUNG EINER AUF EINER MIT EINEM FLÜSSIGEN MEDIUM IN KONTAKT STEHENDEN OBERFLÄCHE ABGESCHIEDENEN SCHICHT UND SENSOR ZUR DURCHFÜHRUNG DES VERFAHRENS

PROCÉDÉ DE DÉTECTION ET DE MESURE D'UNE COUCHE DÉPOSÉE SUR UNE SURFACE EN CONTACT AVEC UN MILIEU LIQUIDE, ET CAPTEUR DE DÉTECTION ET DE MESURE METTANT EN OEUVRE CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2017 IT 201700130254**

(43) Date of publication of application:
**23.09.2020 Bulletin 2020/39**

(73) Proprietors:
• **Politecnico di Milano**
**20133 Milano (IT)**
• **Fondazione Cassa di Risparmio delle Province Lombarde**
**20121 Milano (IT)**

(72) Inventors:
• **CARMINATI, Marco**
**20133 Milano (IT)**
• **TUROLLA, Andrea**
**20133 Milano (IT)**
• **ANTONELLI, Manuela**
**20133 Milano (IT)**

(74) Representative: **Mati, Silvia et al**
**Thinx S.r.l.**
**P.le Luigi Cadorna, 10**
**20123 Milano (IT)**

(56) References cited:
**EP-A1- 1 376 112     WO-A1-2016/097316**
**GB-A- 2 527 794     US-A1- 2011 035 157**

EP 3 710 817 B1

**Description**

**TECHNICAL FIELD**

The present invention generally relates to a method for detecting and measuring a layer deposited on a surface in contact with a liquid medium, for example the surface of a pipe and/or of a tank, and a detecting and measuring sensor implementing the method. Specifically, the present invention is directed at applications in which deposit layers of different natures can be formed, for example inorganic and/or biological, being able to discern between the particular type of deposit.

By way of example the present invention finds preferred application in the field of water pipeline for detecting deposits that stratify internally to the pipes that comprise the collection, treatment and distribution network, from the intake point, to the point of release in the network and then to the final user.

Altogether equivalently, the invention finds preferred application in the industrial field, in particular in facilities that make use of heat exchangers, boilers, tanks, and so on to treat liquid.

But additionally, the invention finds preferred invention in the field of electrical appliances, for households or otherwise, that make use of water, such as clothes washers, dishwashers, coffee machines and so on, for measuring the thickness of layers of scale and/or biofilm that are deposited in the water inflow and/or outflow pipes and/or in the treatment and/or accumulation tanks.

Within the scope of the present description and in the following claims, the expression "biofilm" means a layer of eukaryotic and/or prokaryotic cells anchored to a solid surface and nested in an organic matrix of biological origin.

**BACKGROUND ART**

To date, several methodologies are known for identifying the presence and measuring the thickness of deposit layers on a surface exposed to contact with liquids, each generally specific for a particular type of deposit.

For example, the document EP 1376112 discloses the use, for identifying the presence and for measuring a layer of scale, of an electric sensor consisting of interdigitated electrodes that monitors the state of cleanliness of pipes in the field of food.

In the present description and in the following claims, the expression "interdigitated electrodes" means a pair of comb-shaped electrodes mutually arranged so that teeth of a first electrode of the pair are interspersed to the teeth of a second electrode of the pair in the absence of mutual contact.

The measurement operation is carried out measuring the capacitance between the electrodes, in other words detecting the variation of the dielectric constant between the deposit and the surrounding liquid, induced by the growth of a layer that removes the liquid from the electrodes. However, this method is not suitable to discern between a layer of scale and another type of layer, the measurement of capacitance not being distinctly influenced according to the nature of the layer. In both cases, capacitance decreases as the thickness of the layer increases.

The document US 6,891,606 describes an optical instrument for real time measurement of a layer of scale in petroleum pipelines. The detection and measurement of the thickness are carried out by measuring the refractive index of the surface subject to change as a function of the formation of scale. This method, in addition to being implementable solely through costly instrumentation, is also unsuitable to discern between a layer of scale or a layer of another type, the measurement of the refractive index not being specifically and distinctly influenced according to the organic or inorganic nature of the layer.

The document US 2011/0286492 describes a sensor based on the change of the thermal conductivity properties of a sensitive element coated by scale. The method for detecting and measuring the thickness based on measuring a change in thermal conductivity is also unsuitable to discern between a layer of scale and another type of layer.

The document WO 2016/097316 describes a sensor for measuring the growth rate of biofilm in culture medium fluids, where the reactive part of the impedance between the electrodes is measured, specifically operating at low frequencies to detect the change of the capacitive part. This sensor is not suitable for the growth of a layer directly in contact with the electrode, thus being difficult to use in dynamic environments in which the liquid medium flows on the surface. In addition, as indicated with reference to the instrument described in EP 1376112, the capacitive measurement does not allow to discern between a layer of scale or a layer of another type, the capacitive measurement not being repeatable and influenced in a significantly different manner according to the nature of the layer.

OBJECTS AND SUMMARY OF THE INVENTION

In light of the above, the problem underpinning the present invention is to overcome the drawbacks of the prior art and in particular to devise a method for detecting and measuring a layer deposited on a surface in contact with a liquid medium that is able to discern among different types of deposit layer.

Within this problem, a purpose of the present invention is to provide a method for detecting and measuring a layer deposited on a surface in contact with a liquid medium that makes it possible to intervene in a targeted manner to contrast or, as the case may be, to promote the deposit of a layer of each type.

According to a first aspect, the invention thus relates to a method for detecting and measuring a layer deposited on a surface in contact with a liquid medium comprising the steps that consist of:

- positioning at least one pair of electrodes arranged at a mutual distance D on the surface in contact with a liquid medium;

- sending to the at least one pair of electrodes a signal having signal frequency f; and

- sensing the impedance between the at least one pair of electrodes,

characterized in that the signal frequency is chosen so as to measure the resistive part of the impedance, the signal frequency being greater than or equal to the zero frequency given by the double layer capacitance and by the resistance of the liquid medium in which the measurement takes place.

The Applicant observed that performing the measurements at a frequency that falls within the specific range of frequencies in which the resistive component of the measured impedance prevails, allows not only to detect and measure the deposit of inorganic layer (for example scale) or biological layer (for example biofilm), but at the same time makes it possible to discern the type of deposit.

Specifically, the Applicant surprisingly discovered that the resistivity induced by a biological layer has an inverse behaviour with respect to the behaviour of an inorganic layer.

The Applicant observed that as the thickness of the inorganic layer grows its resistivity increases, while as the thickness of the biological layer grows the conductivity of the related organic matrix increases, thus determining an overall decline in resistivity.

The Applicant thus considered carrying out the measurements an appropriately selected measurement frequency, so as to make it possible to measure the resistance of the liquid medium and in this way investigating the contrast between the conductivity of the liquid and that of the deposit.

In particular, the Applicant found the link between the range of frequencies suitable to carry out the resistive measurement and the particular measurement configuration, determined both by the geometry of the measurement instrument, and by the electrochemical characteristics of the interface between electrodes and liquid medium in which the measurement takes place.

This range of frequencies allows to carry out measurements of the resistive component of impedance and thus, through a single instrument, both to measure the thickness of the layer, and to determine, as a function of the sign of the measurement, whether said layer is inorganic or biological.

In this way it is advantageously possible to identify the nature of the deposit, thus allowing to intervene in a targeted manner.

The present invention can have at least one of the preferred characteristics that follow, the latter can in particular be combined at will to meet specific application requirements.

According to a second aspect, the invention relates to a sensor for the detection and measurement of a layer deposited on a surface in contact with a liquid medium comprising at least one pair of electrodes arranged at a mutual distance and an electronic processing unit to which the at least one pair of electrodes is connected, the electronic processing unit comprising electronic processing means configured to implement the detection and measurement method described above.

Advantageously, the detecting and measuring sensor according to the invention achieves the technical effects described above in relation to the detection and measurement method.

Preferably, the signal frequency f is higher by at least a factor k than the zero frequency fo, the factor k being greater than or equal to 8.

Still more preferably, the factor k is greater than or equal to 10.

The Applicant has advantageously identified that for signal frequencies higher than the zero frequency by factor of at least 8 or, preferably, of at least 10, an accurate and correct measurement of the resistive part of the impedance is reliably assured.

Preferably, the electrodes of the at least one pair of electrodes are arranged with flat and parallel faces spaced apart by a distance D and the signal frequency f is equal to:

$$f = \frac{k}{2\pi\rho D C_0}$$

with p equal to the electric resistivity of the liquid medium in which the measurement takes place and Co equal to the specific capacitance of the electrochemical interface between the electrodes and the liquid medium.

Preferably, at least a first and a second measurements of the resistive component of the impedance Z are performance, the first measurement of the resistive component being a reference measurement.

In this way it is advantageously possible to recognise whether and what type of deposit is accumulating on the electrodes. If, in the absence of other interventions, a positive different is observed between the reference value and the measurement value, there is an accumulation of inorganic layer. Otherwise, a negative change is an indication of an accumulation of biological layer.

More preferably, also included are the steps that consist of:

- activating the release control of chemical agents for the treatment of inorganic layers when the second measurement of the resistive component is greater than the reference measurement of the resistive component;

- activating the release control of chemical agents for the treatment of biological layers when the second measurement of the resistive component is less than the reference measurement of the resistive component.

Advantageously, the information about the nature of the deposit layer allows to drive the release of a chemical agent rather than another. For example if reducing the thickness of the deposit layer is required, the release of acid is driven for inorganic deposits, while disinfectant is released for deposits of a biological nature.

Still more preferably, the release control of chemical agents for the treatment of inorganic and/or biological layers comprises:

- detecting the thickness of an inorganic deposit layer and/or of a biological deposit layer through a resistive measurement of the liquid medium;

- controlling the release of chemical agents based on the detected thickness.

The measurement of the thickness of the deposit layer, in addition to the information on the type of deposit, advantageously allow to implement a series of control logics directed, according to the case, at maintaining the thickness of the layer below or above respective threshold values.

Preferably, the at least one pair of electrodes comprises a plurality of pairs of electrodes, the electrodes of each pair of electrodes being arranged at a mutual distance different from the other pairs of electrodes.

This peculiar configuration of the electrodes advantageously allows to carry out the measurement of a plurality of ranges of thicknesses of the deposit layer, expanding the spectrum of applicability of the sensor, while maintaining a high degree of measurement precision.

Preferably, further provided is at least one pair of reference electrodes treated so as to prevent the growth of deposits on the same.

Advantageously, the pair of reference electrodes allows to carry out a reference measurement on the basis of which the actual measurements are compared to recognise the nature of the deposit.

Preferably, the at least one pair of electrodes is positioned on a substrate of electrically insulating material, preferably of the flexible type.

In a wholly advantageous manner, the insulating and flexible substrate allows to apply the sensor substantially on any type of surface, be it smooth, curve, conductive or otherwise.

Preferably, the at least one pair of electrodes is of the type with interdigitated electrodes.

With this geometry, the Applicant advantageously observed that the link between the change in ionic resistance and the thickness of the deposit is linear, thus also allowing a quantitative measurement of the thickness.

With this geometry, the change in the distance between the electrodes allows to adjust the sensor to the thickness of the deposit to be measured, always assuring adequate measurement accuracy. In particular, the Applicant verified the ability to detect deposit layers a few micrometres thick with a distance between the electrodes of 10 and 5 microns.

BRIEF DESCRIPTION OF THE DRAWINGS

Further features and advantages of the present invention will be more evident from the following detailed description of certain preferred embodiments thereof made with reference to the appended drawings.

The different features in the individual configurations may be combined with one another as desired according to the preceding description, should there be advantages specifically resulting from a specific combination.

In such drawings,

- Figure 1 is a schematic view of a sensor configured to implement the method for detecting and measuring a layer deposited on a surface in contact with a liquid medium according to the present invention;

- Figure 2 is a partial, schematic cross section view of the sensor of figure 1;

- Figure 3 is a chart that shows impedance as a function of signal frequency;

- Figures 4a and 4b are charts of the resistive component of impedance as a function of the deposit layer in case of respectively inorganic and biological deposit;

- Figure 5 is a schematic representation of a first preferred embodiment of the electrodes used in a sensor configured to implement the method according to the present invention;

- Figure 6 is a schematic representation of a second preferred embodiment of the electrodes used in a sensor configured to implement the method according to the present invention;

- Figure 7 is a schematic representation of a third preferred embodiment of the electrodes used in a sensor configured to implement the method according to the present invention;

- Figure 8 is a schematic representation of a fourth preferred embodiment of the electrodes used in a sensor configured to implement the method according to the present invention;

- Figure 9 is a flowchart of the method for detecting and measuring a layer deposited on a surface in contact with a liquid medium according to the present invention.

DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. However, it is to be understood that there is no intention to limit the invention to the specific embodiment illustrated, rather, on the contrary, the invention intends to cover all the modifications, alternative constructions, and equivalents that fall within the scope of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

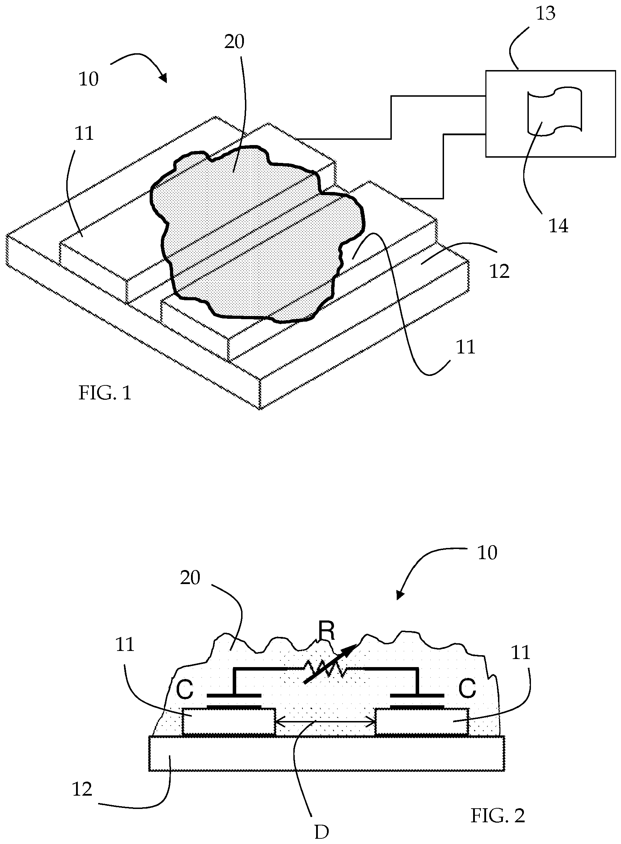

With reference to figure 1, a first preferred embodiment is shown of a sensor configured to implement the method for detecting and measuring a layer deposited on a surface in contact with a liquid medium according to the present invention, designated in its entirety with the numeral 10.

The detection and measuring sensor 10 comprises at least one pair of electrodes 11 positioned on a substrate 12 of electrically insulating material. The electrodes 11 are connected to an electronic processing unit 13 comprising processing means 14 configured to implement the detecting and measuring the method according to the invention.

The set consisting of the substrate 12 and of the electrodes 11 is constructed so as to allow thereon the deposit of a layer 20, be it for example biofilm or a layer of scale.

The electronic processing unit 13 is configured conventionally for the measurement of the impedance Z between the electrodes 11.

Specifically in the preferred embodiment, the electronic processing unit 13 comprises a lock-in vectorial demodulator (not illustrated in detail).

Also provided is a sinusoidal voltage generator (not shown) to drive a first electrode 11, whose amplitude is appropriately selected to avoid undesired electrochemical phenomena at the interface between electrode 11 and solution (typically 20-100 mV).

Lastly, a circuit for reading the current is provided (not shown), connected to the second electrode 11. In addition, a transimpedance circuit (not shown) converts current into voltage. Said voltage is applied to the demodulation circuit that extracts the real part of the detected admittance (Y = 1/Z).

The processing means 14 are configured to generate a measurement signal having frequency f, which is transmitted to the electrodes 11 to detect the impedance Z generated by the liquid medium and by the layer 20 at the determined measurement frequency f.

In general, the impedance of the deposit layer 20 can be represented through the equivalent circuit shown in Figure 2. It comprises at least a capacitive part C and a resistive part R, resulting in a total impedance that varies as a function of the measurement frequency f, of the relative distance D between the electrodes, as well as of the electrochemical characteristics of the interface between the electrodes and the liquid medium in which the measurement takes place.

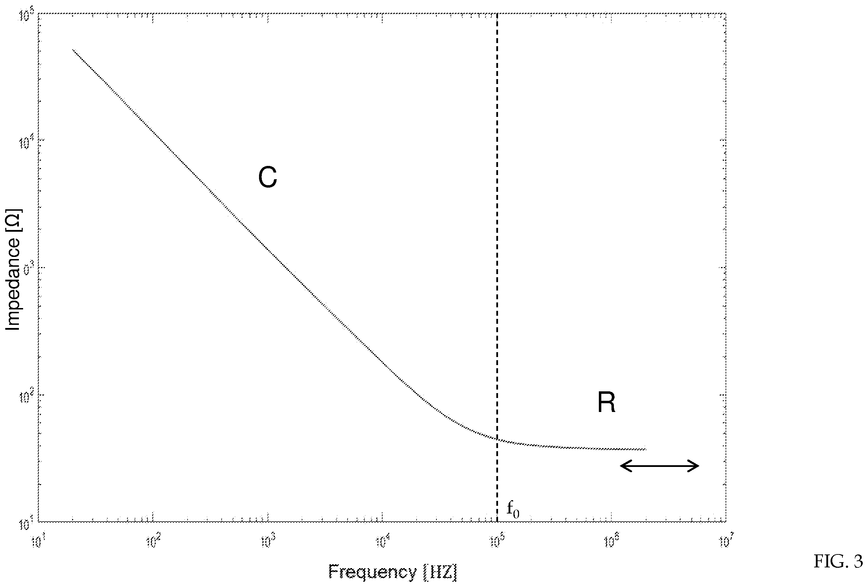

Figure 3 shows a typical pattern of impedance Z as a function of the measurement frequency f at equal remaining measurement conditions. As can be inferred from said graph, the capacitive component of impedance Z is prevalent at low frequencies, while beyond a determined so-called zero frequency fo, the resistive component R of the impedance Z prevails.

Therefore, to carry out a measurement of the resistive component R of impedance Z it is necessary to operate at a frequency that is higher than or equal to the zero frequency fo.

The zero frequency fo is given by the double-layer capacitance ($C_{DL}$) and by the resistance of the liquid medium in which the measurement is carried out ($R_{SOL}$).

The double-layer capacitance ($C_{DL}$) is equal to the product of the surface area of the electrodes 11 times the specific capacitance Co of the electrochemical interface that depends on the type of metal whereof the electrodes 11 are made and on ion concentration in the liquid medium.

To obtain an even more accurate measurement, it is advantageous to operate at a frequency that is higher by at least a factor k than the zero frequency fo, with $k \geq 8$, or preferably, with $k \geq 10$.

To carry out a measurement of the resistive part R of impedance Z, the measurement frequency f must therefore satisfy the following algorithm:

$$f = \frac{k}{2\pi R_{SOL} C_{DL}} \gg f_0 = \frac{1}{2\pi R_{SOL} C_{DL}}$$

In the case of electrodes arranged, as in Figures 1 and 2, with flat and parallel faces spaced apart by a distance D, the signal frequency suitable to assure a measurement of the resistive part of the impedance is equal to:

$$f = \frac{k}{2\pi\rho D C_0}$$

In the case of electrodes with different geometry, resistance $R_{SOL}$ is estimated by means of the cell constant b(D), i.e. a factor that depends on geometry and linearly ties resistance to resistivity: $R_{SOL} = \rho \cdot b(D)$. Therefore, signal frequency is determined by the following algorithm:

$$f = \frac{k}{2\pi\rho b(D) C_{DL}}$$

In all cases, as D grows, resistance $R_{SOL}$ increases and hence the signal frequency f suitable for detecting the resistive part R of the impedance Z decreases.

In case of coplanar electrodes, such as those of Figures 1 and 2, D is selected of comparable length with the thickness of fouling to be measured because 95% of the field lines extend vertically within a thickness equal to D.

The cell constant can be estimated by means of conformal maps. For example, in case of potable water, indicatively p = 750µS/cm, from which the zero frequency fo is approximately $10^5$ kHz, as shown in Figure 3, and the signal frequency f is preferably selected f ≥ 1MHz.

By increasing D, the signal frequency f that assures the detection of the resistive part R of impedance Z is reduced correspondingly, remaining nonetheless typically between 10kHz and 10MHz.

The Applicant surprisingly discovered that by carrying out measurements with signal frequency f that satisfies the above algorithm, and thus detecting the resistive part of the impedance Z, it is possible to detect opposite behaviours depending on whether the deposit layer is biological (biofilm) or inorganic (scale).

This discovery was validated through the following experimentation.

Bacteria were made to grow in a reactor specifically made to speed up and control biomass growth in a solution in which the electrodes 11 were also submerged.

With regard to fouling as a result of the formation of scale on the electrodes 11, a protocol for the controlled deposition of calcium carbonate was defined, applied to solutions into which the electrodes 11 were submerged.

Coplanar electrodes, microfabricated by gold lithography on glass substrate, were used, characterised by a distance D = 10 micron, a total sensitive surface area of approximately 1cm², with zero frequency $f_0$ equal to approximately 70kHz (Figure 3) in potable water (with resistivity of approximately 750µS/cm).

In this case, the adopted measurement frequency is f = 2 Mhz (hence with k = 28).

The thickness of the biofilm grown on the electrodes 11 or of the layer of scale deposited was measured with an atomic force microscope (AFM). In this way it was possible to correlate the change in the measured resistance of the solution with the thickness of the deposit.

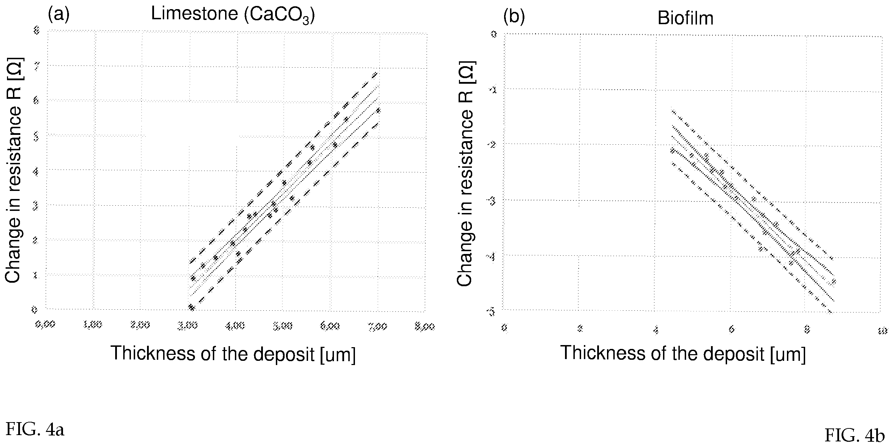

As shown in Figures 4a and 4b, said correlation is linear in both cases, for thicknesses between 3 and 8 micron. For scale (Figure 4a), the derivative is positive: as the layer of fouling increases, the resistance that hinders ion motion increases.

Instead, surprisingly, in the case of biofilm (Figure 4b), the derivative is negative: as thickness grows, resistance decreases. This effect was ascribed by the Applicant to the presence of an extracellular matrix consisting of organic polymers (known by the acronym EPS) which surrounds the bacteria allowing the formation of a structured colony; said matrix is enriched with a high number of ions that produce a local increase in conductivity.

The different effect of the growth of the layers of a biological or chemical nature on the measured resistance therefore makes it possible not only to measure the thickness of the deposit layer, but also to discern its nature.

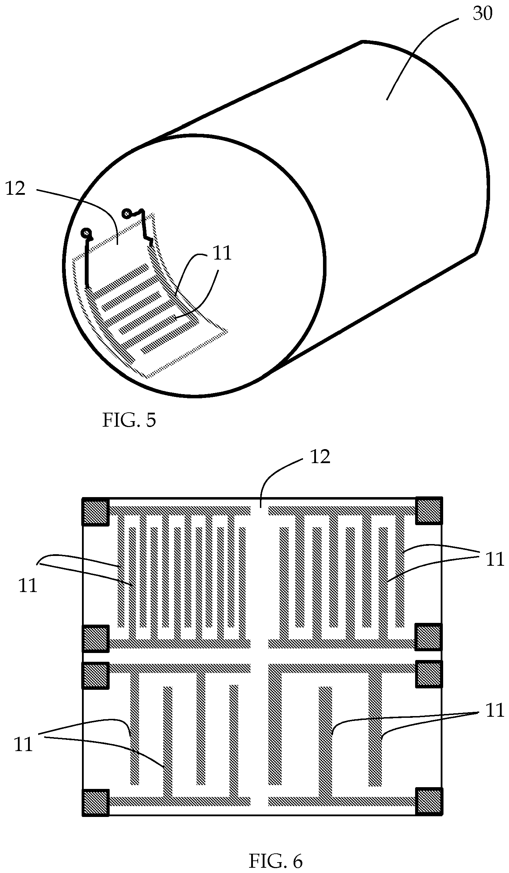

Figure 5 shows a preferred embodiment of the electrodes 11 of the detection and measuring sensor 10, embodied as interdigitated electrodes. The interdigitated electrodes 11 are borne on a flexible substrate 12 so they can be applied to a curved surface, for example the inner surface of a pipe 30, as shown in Figure 5.

Figure 6 shows an additional preferred embodiment of the electrodes 11 of the detection and measuring sensor 10, embodied as interdigitated electrodes in this case as well.

In particular, four pairs of electrodes 11 are advantageously provided, respectively positioned at different mutual distances D, so as to be able to carry out the measurement of a plurality of intervals of thicknesses of the deposit layer.

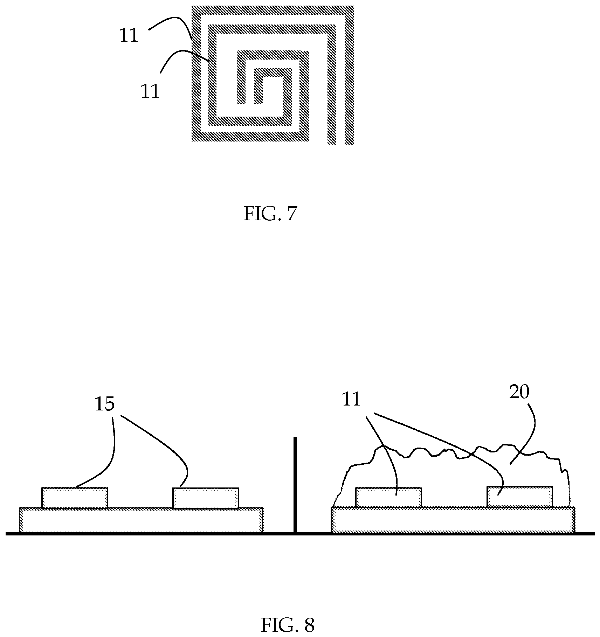

Figure 7 shows another preferred embodiment of the electrodes 11 of the detection and measuring sensor 10, of the spiral pair type.

According to this embodiment, the two electrodes develop parallel, separated by a distance D, each delineating a spiral that covers the sensitivity area.

Figure 8 shows yet another preferred embodiment of the electrodes 11 of the detection and measuring sensor 10.

In the embodiment of Figure 8, advantageously, two groups of electrodes 11 are provided of which a first group 15 is treated so as to prevent the growth of deposit on the same (for example through constant cleaning) and serves as a reference, while a second group of electrodes 11 is such as to allow the growth of deposit on the same.

The measurement carried out through the first group of electrodes 15 provides a reference value, allowing to interpret the measurement of the second group of electrodes directly, with no need to carry out a differential measurement taken at two different times.

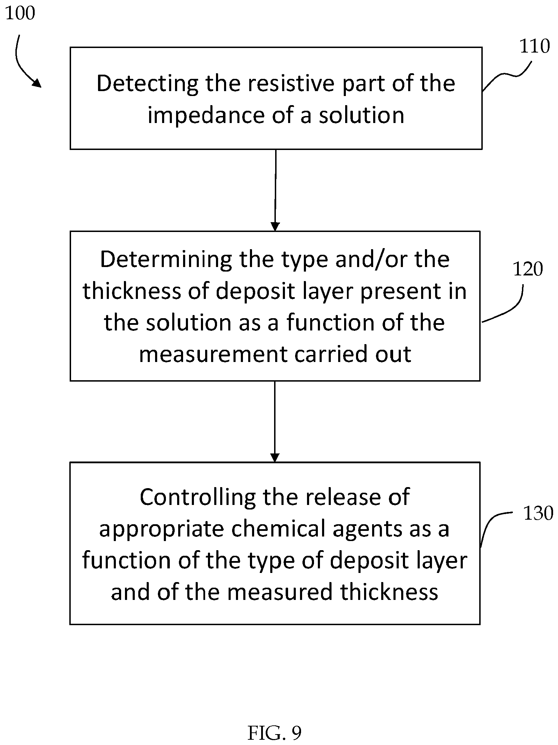

The method 100 for detecting and measuring a layer deposited on a surface in contact with a liquid medium according to the present invention is illustrated in Figure 9 and, in general terms, it comprises:

- a first step 110 of measuring the resistive part of the impedance of a solution, in which a layer of deposit, be it inorganic or biological, may have formed;

- a second step 120 in which, on the basis of the measurements carried out, the type and/or the thickness of a layer of deposit present in the solution are determined;

- a third step 130 (optional), in which, according to the type of deposit layer and to the measured thickness, the release of appropriate chemical agents is controlled.

The first measuring step 110 generally comprises the steps that consist of:

- positioning at least one pair of electrodes arranged at a mutual distance D on the surface in contact with a liquid medium;

- sending to the electrodes a signal having signal frequency f;

- sensing the impedance between the at least one pair of electrodes 11.

According to the invention, the signal frequency f is selected so as to be greater by at least a factor k than the zero frequency fo given by the double-layer capacitance ($C_{DL}$) and by the resistance of the liquid medium in which the measurement is carried out ($R_{SOL}$), with $k \geq 10$.

The second step 120 of interpreting the measurements carried out in the previous measuring step 110 is based on the fact that, if when carrying out for example a plurality of measurements at different time intervals, a change in resistivity is detected, it is possible to recognise which type of deposit is accumulating on the electrodes on the basis of the sign of the variation. In the absence of other interventions, if the sign of the variation is positive, it is an accumulation of inorganic layer. Otherwise, a negative change is an indication of an accumulation of biological layer.

In case of electrodes 11 embodied as in Figure 6, to each pair of electrodes is fed a signal having signal frequency f that satisfies the indicated algorithm. In particular, the pairs of electrodes 11 that are most distant from each other, are fed with correspondingly lower signal frequencies so as to ensure that the resistive part of the impedance is always detected.

In case of electrodes 11 embodied as in Figure 8, the measurement obtained from the first group of electrodes 11 treated so as to prevent deposit from growing thereon serves as a reference, allowing to understand with a single measurement whether it is a layer of biological or inorganic deposit.

The third step 130 of controlling the release of chemical agents as a function of the measurements obtained and of the specific applications can vary according to the applications.

In case of inorganic deposit that serves as a protective layer of the surface on which it grows, for example for asbestos cement pipes in order to prevent the release of asbestos fibres or to inhibit the corrosion of metal surfaces, the release of chemical substances that promote the growth of the deposit is regulated.

If the thickness of the deposit declines below a minimum value, the release of the chemical substances that promote growth is increased. Otherwise, if the thickness exceeds a maximum value, the release of chemical substances is reduced or interrupted to limit the operating costs of the plant.

In case of inorganic and/or organic deposit that could for example compromise the good operation of a water supply network or corrode a metal surface, the release of washing substances (for example acid) and/or disinfecting substances is regulated according to the type of deposit.

In typical water pipeline applications, the release of chemical substances is also regulated on the basis of the measured thickness of the deposit relative to a maximum threshold value.

If a growth of biological layer above a determined maximum threshold value is identified, the release of disinfectant is initiated. If, on the contrary, a growth of inorganic layer (scale) above a determined threshold is identified, the release of acid is initiated.

In industrial applications, the release can be continuous or discontinuous, according to the particular application. In case of discontinuous releases for periodic cleanings of the circuits in which the liquid flows, at the end of the release of chemical substances, a step of rinsing the circuit follows; the dosages of chemical substances, the duration of the steps of dosage (cleaning) and of subsequent rinsing are a function of the attainment of a threshold value of the deposit thickness.

**Claims**

1. Method (100) for detecting and measuring a layer deposited on a surface in contact with a liquid medium, comprising the steps of:

   - positioning at least one pair of electrodes (11) on the surface in contact with a liquid medium, the electrodes (11) being arranged at a mutual distance (D);
   - sending to the at least one pair of electrodes (11) a signal having signal frequency (f); and
- sensing the impedance (Z) between the at least one pair of electrodes (11)

**characterized in that** the signal frequency (f) is chosen so as to measure the resistive part of the impedance (Z), the signal frequency (f) being greater or equal to the zero frequency (fo) given by the double layer capacitance ($C_{DL}$) and by the resistance ($R_{SOL}$) of the liquid medium in which the measurement takes place.

2. Method (100) for detecting and measuring according to claim 1, wherein the signal frequency (f) is greater at least by a factor (k) than the zero frequency (fo), with the factor (k) being greater than or equal to 8.

3. Method (100) for detecting and measuring according to claim 2, wherein the factor (k) is greater than or equal to 10.

4. Method (100) for detecting and measuring according to any one of claims 1 to 3, wherein the electrodes (11) of the at least one pair of electrodes (11) are arranged with flat and parallel faces spaced apart by a distance (D) and the signal frequency (f) is equal to:

$$ f = \frac{k}{2\pi\rho D C_0} $$

with p equal to the electric resistivity of the liquid medium in which the measurement takes place and Co equal to the specific capacitance of the electrochemical interface between the electrodes and the liquid medium.

5. Method (100) for detecting and measuring according to any one of the preceding claims, wherein at least a first and a second measurement of the resistive component of the impedance (Z) are performed, the first measurement of the resistive component being a reference measurement.

6. Method (100) for detecting and measuring according to claim 5, further comprising the steps of:

- activating the release control of chemical agents for the treatment of inorganic layers when the second measurement of the resistive component is greater than the reference measurement of the resistive component;
- activating the release control of chemical agents for the treatment of biological layers when the second measurement of the resistive component is less than the reference measurement of the resistive component.

7. Method (100) for detecting and measuring according to claim 6, wherein the release control of chemical agents for the treatment of inorganic and/or organic layers comprises:

- detecting the thickness of an inorganic deposit layer and/or of a biological deposit layer through a resistive measurement of the liquid medium;
- controlling the release of chemical agents based on the detected thickness.

8. Sensor (10) for the detection and measurement of a layer deposited on a surface in contact with a liquid medium comprising at least one pair of electrodes (11) arranged at a mutual distance (D) and an electronic processing unit (13) to which the at least one pair of electrodes (11) is connected, the electronic processing unit (13) comprising electronic processing means (14) configured to implement the detection and measurement method according to any one of the preceding claims.

9. Detection and measurement sensor (10) according to claim 8, wherein the at least one pair of electrodes (11) comprises a plurality of pairs of electrodes (11), the electrodes of each pair of electrodes (11) being arranged at a mutual distance different from the other pairs of electrodes (11).

10. Detection and measurement sensor (10) according to claim 8 or 9, further comprising at least one pair of reference electrodes (15) treated so as to prevent the growth of a deposit on the same (15).

11. Detection and measurement sensor (10) according to any one of claims 8 to 10, wherein the at least one pair of electrodes (11) is arranged on a substrate (12) made of electrically insulating material, preferably of the flexible type.

12. Detection and measurement sensor (10) according to any one of claims 8 to 11, wherein the at least one pair of electrodes (11) is of the type with coplanar interdigitated or spiral electrodes.

**Patentansprüche**

1. Verfahren (100) zum Erfassen und Messen einer Schicht, die sich auf einer mit einem flüssigen Medium in Kontakt stehenden Oberfläche abgesetzt hat, welches die Schritte aufweist:

- Positionierung mindestens eines Paares von Elektroden (11) auf der Oberfläche in Kontakt mit einem flüssigen Medium, wobei die Elektroden (11) in einem gegenseitigen Abstand (D) angeordnet sind;

- Senden eines Signals mit einer Signalfrequenz (f) an das mindestens eine Elektrodenpaar (11); und
- Erfassen der Impedanz (Z) zwischen dem mindestens einen Elektrodenpaar (11) **dadurch gekennzeichnet, dass** die Signalfrequenz (f) so gewählt wird, dass die Widerstandskomponente der Impedanz (Z) gemessen wird, wobei die Signalfrequenz (f) größer oder gleich der Nullfrequenz (fo) ist, die durch die Doppelschichtkapazität ($C_{DL}$) und den Widerstand ($R_{SOL}$) des flüssigen Mediums, in dem die Messung stattfindet, gegeben ist.

2. Verfahren (100) zum Erfassen und Messen nach Anspruch 1, wobei die Signalfrequenz (f) mindestens um einen Faktor (k) größer ist als die Nullfrequenz (fo), wobei der Faktor (k) größer oder gleich 8 ist.

3. Verfahren (100) zum Erfassen und Messen nach Anspruch 2, wobei der Faktor (k) größer oder gleich 10 ist.

4. Verfahren (100) zum Erfassen und Messen nach einem der Ansprüche 1 bis 3, wobei die Elektroden (11) des mindestens einen Elektrodenpaares (11) mit ebenen und parallelen Flächen in einem Abstand (D) angeordnet sind und die Signalfrequenz (f) beträgt:

$$ f = \frac{k}{2\pi\rho D C_0} $$

wobei p gleich dem elektrischen Widerstand des flüssigen Mediums ist, in dem die Messung stattfindet, und Co gleich der spezifischen Kapazität der elektrochemischen Übergangsfläche zwischen den Elektroden und dem flüssigen Medium ist.

5. Verfahren (100) zum Erfassen und Messen nach einem der vorhergehenden Ansprüche, wobei mindestens eine erste und eine zweite Messung der Widerstandskomponente der Impedanz (Z) durchgeführt werden, wobei die erste Messung der Widerstandskomponente eine Referenzmessung ist.

6. Verfahren (100) zum Erfassen und Messen nach Anspruch 5, das ferner die Schritte umfasst:

- Aktivierung der Freisetzungssteuerung chemischer Mittel zur Behandlung von anorganischen Schichten, wenn der zweite Messwert der Widerstandskomponente größer als der Referenzmesswert der Widerstandskomponente ist;
- Aktivierung der Freisetzungssteuerung chemischer Mittel zur Behandlung biologischer Schichten, wenn der zweite Messwert der Widerstandskomponente kleiner als der Referenzmesswert der Widerstandskomponente ist.

7. Verfahren (100) zum Erfassen und Messen nach Anspruch 6, wobei die Freisetzungssteuerung chemischer Mittel zur Behandlung von anorganischen und/oder organischen Schichten umfasst:

- Erfassen der Dicke einer anorganischen Ablagerungsschicht und/oder einer biologischen Ablagerungsschicht durch eine Widerstandsmessung des flüssigen Mediums;
- Steuerung der Freisetzung von chemischen Stoffen auf der Grundlage der erfassten Dicke.

8. Sensor (10) zur Erfassung und Messung einer auf einer Oberfläche in Kontakt mit einem flüssigen Medium abgelagerten Schicht, aufweisend mindestens ein Paar von Elektroden (11), die in einem gegenseitigen Abstand (D) angeordnet sind, und eine elektronische Verarbeitungseinheit (13), mit der das mindestens eine Paar von Elektroden (11) verbunden ist, wobei die elektronische Verarbeitungseinheit (13) elektronische Verarbeitungsmittel (14) aufweist, die derart konfiguriert sind, dass sie das Erfassungs- und Messverfahren nach einem der vorhergehenden Ansprüche durchführen.

9. Erfassungs- und Messsensor (10) nach Anspruch 8, wobei das mindestens eine Elektrodenpaar (11) eine Vielzahl von Elektrodenpaaren (11) aufweist, wobei die Elektroden jedes Elektrodenpaares (11) in einem von den anderen Elektrodenpaaren (11) verschiedenen gegenseitigen Abstand angeordnet sind.

10. Erfassungs- und Messsensor (10) nach Anspruch 8 oder 9, der zudem mindestens ein Paar Referenzelektroden (15) aufweist, die derart behandelt sind, dass sie das Wachstum einer Ablagerung auf denselben (15) verhindern.

11. Erfassungs- und Messsensor (10) nach einem der Ansprüche 8 bis 10, wobei das mindestens eine Elektrodenpaar (11) auf einem Substrat (12) aus elektrisch isolierendem Material, vorzugsweise des flexiblen Typs, angeordnet ist.

12. Erfassungs- und Messsensor (10) nach einem der Ansprüche 8 bis 11, wobei das mindestens eine Elektrodenpaar (11) der Art mit koplanar ineinandergreifenden oder spiralförmigen Elektroden ist.

**Revendications**

1. Procédé (100) de détection et de mesure d'une couche déposée sur une surface en contact avec un milieu liquide, comprenant les étapes consistant à :

- positionner au moins une paire d'électrodes (11) sur la surface en contact avec un milieu liquide, les électrodes (11) étant disposées à une distance mutuelle (D) ;
- envoyer à ladite au moins une paire d'électrodes (11) un signal ayant une fréquence de signal (f) ; et
- détecter l'impédance (Z) entre ladite au moins une paire d'électrodes (11),

**caractérisé par le fait que** la fréquence de signal (f) est choisie de façon à mesurer la partie résistive de l'impédance (Z), la fréquence de signal (f) étant supérieure ou égale à la fréquence zéro (fo) donnée par la capacitance double couche ($C_{DL}$) et par la résistance ($R_{SOL}$) du milieu liquide dans lequel la mesure s'effectue.

2. Procédé (100) de détection et de mesure selon la revendication 1, dans lequel la fréquence de signal (f) est supérieure au moins d'un facteur (k) à la fréquence zéro (fo), le facteur (k) étant supérieur ou égal à 8.

3. Procédé (100) de détection et de mesure selon la revendication 2, dans lequel le facteur (k) est supérieur ou égal à 10.

4. Procédé (100) de détection et de mesure selon l'une quelconque des revendications 1 à 3, dans lequel les électrodes (11) de ladite au moins une paire d'électrodes (11) sont disposées avec des faces plates et parallèles espacées d'une distance (D) et la fréquence de signal (f) est égale à :

$$f = \frac{k}{2\pi\rho D C_0}$$

avec p égal à la résistivité électrique du milieu liquide dans lequel la mesure s'effectue, et Co égal à la capacitance spécifique de l'interface électrochimique entre les électrodes et le milieu liquide.

5. Procédé (100) de détection et de mesure selon l'une quelconque des revendications précédentes, dans lequel au moins une première et une seconde mesure de la composante résistive de l'impédance (Z) sont réalisées, la première mesure de la composante résistive étant une mesure de référence.

6. Procédé (100) de détection et de mesure selon la revendication 5, comprenant en outre les étapes consistant à :

- activer la commande de libération d'agents chimiques pour le traitement de couches inorganiques lorsque la seconde mesure de la composante résistive est supérieure à la mesure de référence de la composante résistive ;
- activer la commande de libération d'agents chimiques pour le traitement de couches biologiques lorsque la seconde mesure de la composante résistive est inférieure à la mesure de référence de la composante résistive.

7. Procédé (100) de détection et de mesure selon la revendication 6, dans lequel la commande de libération d'agents chimiques pour le traitement de couches inorganiques et/ou organiques comprend :

- détecter l'épaisseur d'une couche de dépôt inorganique et/ou d'une couche de dépôt biologique par une mesure résistive du milieu liquide ;
- commander la libération d'agents chimiques sur la base de l'épaisseur détectée.

8. Capteur (10) de détection et de mesure d'une couche déposée sur une surface en contact avec un milieu liquide comprenant au moins une paire d'électrodes (11) disposées à une distance mutuelle (D) et une unité de traitement électronique (13) à laquelle ladite au moins une paire d'électrodes (11) est connectée, l'unité de traitement électronique (13) comprenant des moyens de traitement électronique (14) configurés pour mettre en œuvre le procédé de détection et de mesure selon l'une quelconque des revendications précédentes.

9. Capteur de détection et de mesure (10) selon la revendication 8, dans lequel ladite au moins une paire d'électrodes (11) comprend une pluralité de paires d'électrodes (11), les électrodes de chaque paire d'électrodes (11) étant disposées à une distance mutuelle différente des autres paires d'électrodes (11).

10. Capteur de détection et de mesure (10) selon l'une des revendications 8 ou 9, comprenant en outre au moins une paire d'électrodes de référence (15) traitées de façon à empêcher la croissance d'un dépôt sur celles-ci (15).

11. Capteur de détection et de mesure (10) selon l'une quelconque des revendications 8 à 10, dans lequel ladite au moins une paire d'électrodes (11) est disposée sur un substrat (12) constitué d'un matériau électriquement isolant, de préférence du type flexible.

12. Capteur de détection et de mesure (10) selon l'une quelconque des revendications 8 à 11, dans lequel ladite au moins une paire d'électrodes (11) est du type à électrodes interdigitées ou en spirale coplanaires.

FIG. 1

FIG. 2

FIG. 3

(a) Limestone (CaCO₃)

(b) Biofilm

FIG. 4a

FIG. 4b

FIG. 5

FIG. 6

FIG. 7

FIG. 8

100

110

Detecting the resistive part of the impedance of a solution

120

Determining the type and/or the thickness of deposit layer present in the solution as a function of the measurement carried out

130

Controlling the release of appropriate chemical agents as a function of the type of deposit layer and of the measured thickness

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1376112 A
- US 6891606 B
- US 20110286492 A
- WO 2016097316 A